Europäisches Patentamt

European Patent Office

Office européen des brevets

(11) Numéro de publication: **0 226 510 B1**

# FASCICULE DE BREVET EUROPEEN

(45) Date de publication de fascicule du brevet:
29.05.91

(51) Int. Cl.⁵: **H02M 3/338**

(21) Numéro de dépôt: **86402693.5**

(22) Date de dépôt: **04.12.86**

(54) Convertisseur symétrique de tension à régulation primaire.

(30) Priorité: **05.12.85 FR 8518017**

(43) Date de publication de la demande:
**24.06.87 Bulletin 87/26**

(45) Mention de la délivrance du brevet:
**29.05.91 Bulletin 91/22**

(84) Etats contractants désignés:
**CH DE FR GB IT LI NL**

(56) Documents cités:
**EP-A- 0 061 730
FR-A- 1 404 991
FR-A- 2 178 866
US-A- 3 836 836
US-A- 4 344 122**

(73) Titulaire: **COMMISSARIAT A L'ENERGIE ATO-MIQUE Etablissement de Caractère Scientifique Technique et Industriel
31/33, rue de la Fédération
F-75015 Paris(FR)**

(72) Inventeur: **Rabeyrolles, Serge
1, Allée des Prats
F-33610 Cestas(FR)**

(74) Mandataire: **Mongrédien, André et al
c/o BREVATOME 25, rue de Ponthieu
F-75008 Paris(FR)**

## Description

La présente invention concerne un convertisseur symétrique de tension à régulation primaire ; ce convertisseur permet de stabiliser la tenson appliquée à une charge, par l'intermédiaire d'un circuit de régulation agissant sur le primaire du convertisseur.

Ce convertisseur permet de s'affranchir des variations usuelles affectant les composants électriques notamment sous l'effet de la température, et des variations de la tension continue alimentant le convertisseur.

Cette invention s'applique notamment à l'alimentation electrique haute tension d'une charge stable capacitive ou non capacitive.

Le reste de la description n'envisage que l'alimentation par une tension continue d'une charge stable, étant bien entendu que l'invention s'applique également à l'alimentation d'une charge stable par une tension alternative de forme rectangulaire dont la stabilité de l'amplitude crête à crête est souhaitée.

De façon connue, pour modifier l'amplitude d'une tension continue, on transforme tout d'abord cette tenson continue en une tension alternative. Celle-ci est alors amenée à la valeur souhaitée à l'aide d'un transformateur.Puis, par redressement et filtrage de la tension alternative résultante, on obtient la tension continue souhaitée.

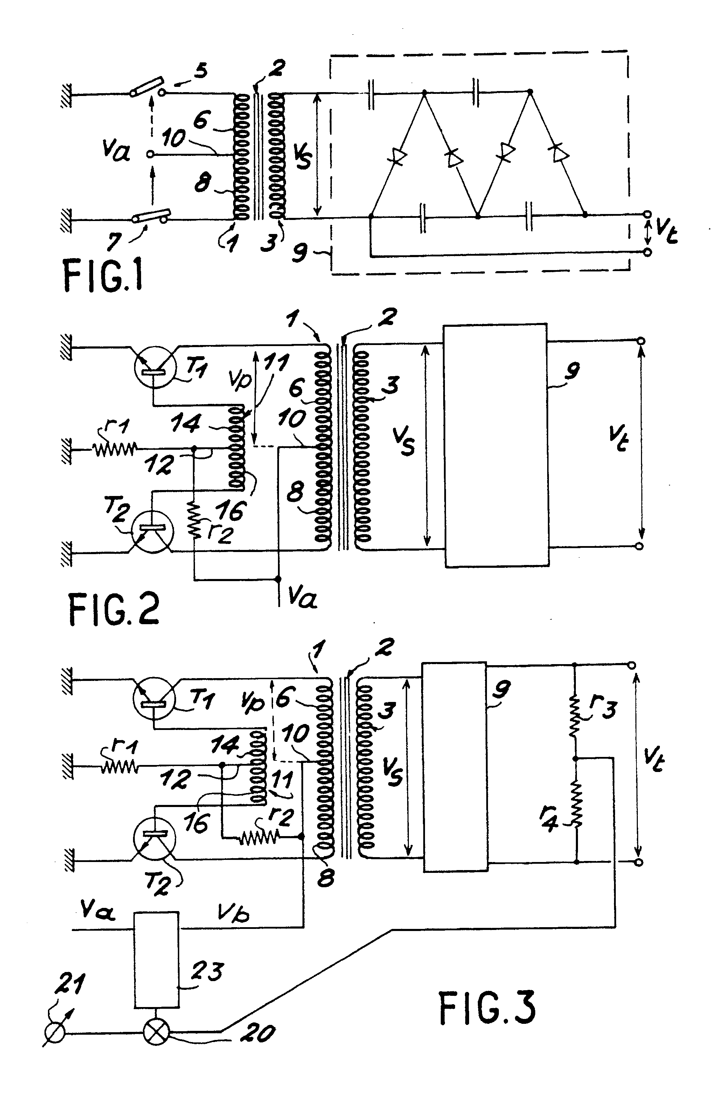

La figure 1 représente schématiquement un convertisseur symétrique connu, de type continu-continu.

Ce convertisseur comprend deux enroulements : un enroulement primaire 1 et un enroulement secondaire 3, bobinés sur un noyau magnétique 2, deux commutateurs 5 et 7, ces commutateurs étant respectivement reliés à des extrémités distinctes de l'enroulementprimaire 1 ainsi qu'à une masse de référence, et enfin un circuit de traitement 9 relié à l'enroulement secondaire 3.

On appellera dans le reste du texte "primaire et secondaire" du convertisseur l'ensemble des éléments relatifs respectivement à l'enroulement primaire et à l'enroulement secondaire du convertisseur.

L'enroulement primaire 1 comprend deux demienroulements primaires 6, 8 reliés à une borne centrale 10 alimentée par une tension continue $V_a$. Cette tension continue $V_a$ est appliquee alternativement à chaque demi-enroulement primaire 6, 8 grâce aux deux commutateurs 5 et 7 actionnés en opposition de phase. La tension résultante, appliquée à l'enroulement primaire 1, est de ce fait alternative. Par induction électromagnétique, il apparaît aux bornes de l'enroulement secondaire 3 une tension secondaire $V_s$ alternative de forme rectangulaire, dont la valeur est proportionnelle à la tension alternative aux bornes de l'enroulement primaire 1. Le facteur de proportionnalité est dans le rapport du nombre de spires équipant l'enroulement secondaire 3 et l'enroulement primaire 1. Cette tension secondaire $V_s$ est traitée par le circuit de traitement 9 de façon à obtenir une tension continue.

Ce circuit de traitement 9 permet aussi de multipler la valeur de la tension $V_s$ redressée pour obtenir une tension continue $V_t$ de valeur souhaitée.

Ce circuit de traitement 9 comprend par exemple de façon connue, comme représenté figure 1, un ensemble de diodes et de condensateurs permettant de redresser la tension $V_s$ et de multiplier sa valeur. Pour obtenir une tension $V_t$ supérieure à 1000 volts environ, ce circuit de traitement 9 permet d'utiliser une valeur de la tension $V_s$ inférieure à 1000 volts, pour rester dans des limites facilitant l'isolement du secondaire et autorisant un nombre de spires raisonnable.

Les commutateurs 5 et 7 utilisés sont généralement des transistors. Ces transistors doivent être commandés en opposition de phase de façon à ce qu'ils soient alternativement dans l'état bloqué et dans l'etat saturé. Cette commande peut être effectuée par un circuit extérieur délivrant deux signaux en opposition de phase et fixant la fréquence de commutation des transistors, ou à partir du convertisseur lui-même, en utilisant de façon connue un enroulement de réaction comme représenté sur la figure 2

Sur cette figure, les commutateurs 5, 7 de la figure 1 sont remplacés respectivement par des transistors commutateurs $T_1$ et $T_2$ commandés par l'intermédiaire de l'enroulement de réaction 11. Par ailleurs, on retrouve sur cette figure les enroulements primaire 1 et secondaire 3 bobinés sur le noyau magnétique 2 ainsi que le circuit de traitement 9 représentés sur la figure 1.

L'enroulement de réaction 11 est bobine avec l'enroulement primaire 1 et l'enroulement secondaire 3, sur le noyau magnétique 2. L'enroulement de réaction 11 comprend deux demi-enroulements 14, 16 reliés par une borne centrale 12. Ces deux demi-enroulements 14 et 16 sont connectés respectivement aux bases des transistors $T_1$ et $T_2$ tandis que la borne centrale 12 est reliée à une masse de référence par l'intermédiaire d'une résistance $r_1$ et à l'alimentation en tension continue $V_a$, par une résistance $r_2$. Les transistors $T_1$ et $T_2$ sont aussi connectés respectivement par leurs collecteurs, aux bornes extrêmes de l'enroulement primaire 1 et par leurs émetteurs, à la masse. Ces deux demi-enroulements 14 et 16 peuvent être bien entendu connectes aux transistors $T_1$ et $T_2$ par les émetteurs, sans modifier pour cela le principe de commande des transistors $T_1$ et $T_2$.

Dans le cas du convertisseur représenté figure 2, la borne centrale 12 reçoit une tension issue de la tension d'alimentation $V_a$ et atténuée par les deux résistances $r_1$ et $r_2$.

Au démarrage du convertisseur, une légére conduction du transistor $T_1$, par exemple, entraîne l'apparition d'une tension aux bornes du demi-enroulement 6. Par induction électromagnétique, une tension apparaît aux bornes du demi-enroulement 14 qui, appliquée à la base du transistor $T_1$, entraîne la conduction du transistor $T_1$ et, par effet cumulatif, la saturation de ce transistor.

Le passage d'un transistor de l'état conducteur à l'état bloqué et le passage de l'autre transistor de l'etat bloqué à l'état conducteur sont provoqués par l'apparition d'une non linéarité dans le circuit associé au transistor conducteur qui se bloque.

De façon connue, ces non-linéarités sont introduites, soit par l'utilisation de la propriété de saturation du noyau magnétique 2, soit par la limitation des courants de bases respectifs des transistors $T_1$ et $T_2$.

Avec les convertisseurs décrits précédemment, la stabilité de la tension $V_t$ obtenue aux bornes du circuit de traitement 9 dépend de la stabilité de la tension d'alimentation $V_a$ et des pertes de tension inévitables dans les transistors $T_1$ et $T_2$. En effet, les transistors $T_1$ et $T_2$ sont sensibles à la température et maintiennent à leurs bornes, même à l'état saturé, une différence de potentiel dépendant du courant qui les traverse. Ces pertes de tension diminuent d'autant la tension appliquée aux deux demi-enroulements 6 et 8.

Pour stabiliser la tension secondaire continue $V_t$, lorsque celle-ci est faible (inférieure à environ 100 volts), il suffit de la traiter par un régulateur de tout type connu dans l'état de la technique et notamment chez les fabricants de circuits intégrés. Par contre, lorsque la tension $V_t$ est élevée (par exemple supérieure à 1000 volts), on a recours à une boucle d'asservissement au niveau du convertisseur.

La figure 3 représente un exemple de réalisation d'un circuit de régulation connu de l'art antérieur, associé à un convertisseur haute tension.

Sur cette figure, on retrouve les différents éléments du convertisseur de la figure 2, notamment l'enroulement primaire 1 et l'enroulement de réaction 11 bobinés avec l'enroulement secondaire 3 sur le noyau magnétique 2, les deux transistors commutateurs $T_1$ et $T_2$, les résistances $r_1$ et $r_2$ et le circuit de traitement 9. Les autres éléments représentés sur cette figure constituent le circuit de régulation de ce convertisseur.

Ce circuit comprend deux résistances $r_3$ et $r_4$ reliées en série et connectées aux deux bornes de sortie du circuit de traitement 9. Ces résistances $r_3$ et $r_4$ constituent un pont résistif, elles peuvent supporter des valeurs de tensions élevées. Ce circuit comprend également un comparateur 20 tel qu'un soustracteur dont l'entrée est reliée d'une part au point commun aux deux résistances $r_3$ et $r_4$, et d'autre part, à un générateur 21 d'une tension de référence ; la sortie du comparateur est reliée à un circuit amplificateur 23. Par ailleurs, le circuit amplificateur 23 est relié à l'alimentation en tension continue $V_a$ non stabilisée, à la borne centrale 10 de l'enroulement primaire 1, et à la borne centrale 12 de l'enroulement de réaction 11 par l'intermédiaire de la résistance $r_2$.

L'alimentation en tension continue $V_a$ est fournie par exemple par une pile, par une batterie, ou obtenue à partir du secteur. Le générateur 21 de tension de référence fournit une tension de référence continue fixe ou réglable.

Ce circuit de régulation permet de prélever une partie de la tension de sortie continue $V_t$ aux bornes du circuit de traitement 9, par le pont résistif $r_3$ et $r_4$. L'amplitude de la tension prélevée est comparée à l'amplitude de la tension de référence fournie par le générateur de tension 21. Cette comparaison est effectuée par le comparateur 20 qui en élabore la différence. La tension résultant de cette différence, appelée tension d'erreur est amplifiée par le circuit amplificateur 23. A partir de la tension d'erreur amplifiée et de la tension d'alimentation $V_a$, le circuit d'amplification alimente la borne centrale 10 par une tension $V_b$, en général plus faible que la tension $V_a$. La valeur de la tension $V_b$, déterminée par le circuit de régulaton, permet d'obtenir une tension $V_t$ stable.

Ce circuit de régulation permet donc de rendre la tension $V_t$ indépendante des variations de la tension $V_a$, ce circuit étant par ailleurs insensible aux variations de la charge que la tension $V_t$ alimente.

Toutefois, ce circuit de régulation présente des inconvénients. Outre sa relative complexité, étant donné que pour stabiliser la tension $V_b$ et donc la tension $V_t$ on prélève une partie de la tension secondaire $V_t$, ce circuit requiert des résistances de prélèvement $r_3$ et $r_4$ de valeur assez élevée, notamment dans le cas où le rendement du convertisseur est un facteur à prendre en compte. De plus, la résistance $r_3$ doit pouvoir supporter une tension élevée puisque ce circuit de régulation est utilisé généralement pour une tension $V_t$ élevée. Or, les résistances haute tension, de valeur ohmique élevée, ont de mauvais coefficients de température à moins de faire appel à des modèles spéciaux et, en conséquence, rares et coûteux.

Par ailleurs, la polarité de la tension $V_t$ est imposée par le circuit de régulation utilisé ; l'inversion de polarité n'est donc pas simple avec ce convertisseur.

Enfin, les aspects liés à la fréquence de fonctionnement du convertisseur proprement dit, tels que les dépassements de la tension appliquée aux bornes de l'enroulement primaire par rapport à des signaux rectangulaires, ne sont pas contrôlés par le circuit de régulation dont la bande passante est faible et bien inférieure à la fréquence de fonctionnement du convertisseur (ou fréquence de commutation des transistors $T_1$, $T_2$), étant donné que la tension d'erreur est élaborée à partir de la tension de sortie $V_t$, laquelle est filtrée par les moyens de traitement.

On connaît par ailleurs des convertisseurs à régulation primaire tels que celui décrit dans le document FR-A-2 178 866 pour lesquels on stabilise la tension appliquée aux bornes de l'enroulement primaire à partir de la tension prélevée aux bornes de cet enroulement. Dans ce type de convertisseur, on utilise un transistor relié aux transistors de commutation, à l'alimentation en tension continue et à la borne centrale de l'enroulement primaire, comme source de courant des transistors de commutation, la conduction de ce transistor étant réglée en fonction de la tension d'erreur obtenue en comparant la tension prélevée aux bornes de l'enroulement primaire à une tension de référence.

Dans ce type de convertisseur, comme dans le cas du convertisseur décrit figure 3, la tension prélevée est filtrée, ce qui ne permet pas au circuit de régulation de ce convertisseur d'avoir un gain suffisant à fréquence élevée pour permettre le contrôle du convertisseur dans sa période de fonctionnement et notamment de réagir aux dépassements de la tension aux bornes de l'enroulement primaire par rapport à des signaux rectangulaires, en des temps inférieurs à la période de fonctionnement du convertisseur.

L'invention a pour objet un nouveau convertisseur à régulation primaire permettant notamment de remédier aux inconvénients cités précédemment.

Ce convertisseur symétrique de tension, à régulation primaire permet de stabiliser la tension appliquée aux bornes de deux demi-enroulements primaires, par l'intermédiaire d'un circuit de régulation faisant varier le niveau de conduction de deux commutateurs tels que des transistors de commutation qui jouent le rôle de résistances variables, autrement dit de ballasts. Aussi, lorsque ces transistors sont passants ils sont dans un état plus ou moins conducteur entre l'état non-conducteur et l'état saturé.

La stabilisation de la tension appliquée aux bornes des deux demi-enroulements primaires permet de stabiliser la tension $V_t$ issue du secondaire. Cette tension $V_t$ sera donc stable si la charge que la tension $V_t$ alimente, est stable, ou si cette charge ne prélève qu'une énergie négligeable. C'est le cas, par exemple, d'une charge constituée d'un ensemble capacitif, lorsque le ou les condensateurs que comprend cette charge, sont chargés à la tension $V_t$.

Par ailleurs, le circuit de régulation appelé aussi boucle d'asservissement, conforme à l'invention stabilise la tension appliquée aux bornes des deux enroulements primaires à partir de la tension prélevée aux bornes de l'enroulement primaire non filtrée par le circuit de régulation. Le circuit de régulation possède une large bande passante permettant d'agir sur le convertisseur en des temps inférieurs à la période de fonctionnement du convertisseur. De cette façon, le circuit de régulation peut notamment atténuer tous les dépassements de la tension aux bornes de l'enroulement primaire par rapport à des signaux rectangulaires.

De façon plus précise, l'invention a pour objet un convertisseur symétrique de tension à régulation primaire comprenant :
- au moins un enroulement primaire comportant deux demi-enroulements primaires et une borne centrale, ainsi qu'un enroulement secondaire, ces enroulements primaire et secondaire étant bobinés sur un noyau magnétique,
- au moins une alimentation en tension continue,
- un premier et un second commutateurs connectés respectivement à une borne extrême de l'enroulement primaire, lesdits commutateurs appliquant alternativement aux bornes de chaque demi-enroulement primaire une tension primaire correspondant à une fraction de la tension d'alimentation continue, ladite tension primaire induisant une tension secondaire alternative dans l'enroulement secondaire,
- des moyens de commande des commutateurs, lesdits moyens de commande étant connectés aux commutateurs et permettant de faire fonctionner alternativement lesdits commutateurs,
- un circuit de régulation comportant :
- des moyens pour prélever et redresser une tension égale à la tension aux bornes de l'enroulement primaire,
- des moyens pour atténuer la tension prélevée et redressée, lesdits moyens d'atténuation étant connectés aux moyens de prélèvement et de redressement,
- des moyens pour comparer une tension de référence avec la tension atténuée pour en extraire une tension d'erreur, ladite tension d'erreur correspondant à la différence entre la tension de référence et la tension atténuée, ces moyens recevant la tension de référence et étant connectés aux moyens d'atténuation,

- des moyens pour amplifier la tension d'erreur, lesdits moyens étant connectés aux moyens de comparaison,
- des moyens de démarrage reliés à l'alimentation en tension continue, aux moyens d'amplificaton et aux commutateurs, pour faire démarrer le convertisseur,

caractérisé en ce que les moyens de démarrage alimentent lesdits commutateurs par un premier courant prélevé par les moyens de démarrage sur l'alimentation en tension continue et pour constituer une charge des moyens d'amplification au cours du fonctionnement du convertisseur, afin que les commutateurs soient alimentés par un deuxième courant égal à la différence entre le premier courant prélevé par les moyens de démarrage et un courant proportionnel à la tension d'erreur amplifiée, extrait par les moyens d'amplification sur le premier courant, les courants alimentant les commutateurs réglant le niveau de conduction desdits commutateurs au cours de leur fonctionnement, le gain du circuit de régulation étant fixé par lesdits moyens de démarrage, lesdits moyens de régulation comportant en outre des moyens pour faire varier le gain du circuit de régulation en fonction de la fréquence de façon à faire diminuer le gain quand la fréquence augmente, ce gain étant suffisant à fréquence élevée pour permettre le contrôle du convertisseur.

Ces moyens pour faire varier le gain du circuit de régulation en fonction de la fréquence assurent la stabilité nécessaire à la bande d'asservissement tout en conservant un gain suffisant à fréquence élevée. En effet, pour assurer cette stabilité, le gain du circuit de régulation doit être de plus en plus faible à mesure que la fréquence augmente. L'utilisation de tels moyens exclut la présence de tout autre élément de filtrage, à une fréquence inférieure à la fréquence de fonctionnement du convertisseur, pour la détermination de la tension d'erreur.

Les commutateurs utilisés dans le convertisseur de l'invention peuvent être constitués par n'importe quels éléments ayant un état linéaire entre un état bloqué autrement dit non conducteur et un état conducteur de type saturé, tels que les transistors bipolaires ou à effet de champ.

Les moyens de commande utilisés sont constitués soit par des moyens extérieurs au convertisseur, soit par un enroulement de réaction du type de ceux décrits précédemment dans les figures 2 et 3.

Les moyens de démarrage du convertisseur conforme à l'invention comprennent de façon avantageuse des moyens pour limiter le premier courant nécessaire au démarrage du convertisseur.

Selon un autre mode de réalisation d'un convertisseur conforme l'invention, les deux commutateurs sont des transistors commutateurs, le collecteur de chaque transistor étant relié à une borne extrême correspondante de l'enroulement primaire dont la borne centrale est reliée à l'alimentation en tension continue, la base de chaque transistor étant reliée aux moyens de démarrage et l'émetteur de chaque transistor etant relié aux moyens de commande.

Bien entendu, les transistors commutateurs peuvent être connectés différemment. Ainsi, par exemple, le collecteur de chaque transistor peut être relié à une borne extrême correspondante de l'enroulement primaire, la base de chaque transistor peut être reliée aux moyens de commande eux-mêmesconnectés aux moyens de demarrage et les émetteurs des deux transistors peuvent être reliés à la masse.

Selon un autre mode de réalisation d'un convertisseur conforme à l'invention, les moyens de prélèvement et de redressement sont connectés aux deux bornes extrêmes de l'enroulement primaire permettant de prélever et de redresser la tension aux bornes de l'enroulement primaire.

Selon une variante du mode de realisation d'un convertisseur conforme à l'invention, les moyens pour prélever et redresser sont connectés aux bornes extrêmes d'un enroulement primaire supplémentaire identique à l'enroulement primaire et bobiné avec ledit enroulement primaire sur le noyau magnétique, une borne centrale dudit enroulement primaire supplémentaire étant connectée à la masse, lesdits moyens permettant de prélever et de redresser la tension aux bornes de l'enroulement primaire supplémentaire, cette tension étant égale à la tension aux bornes de l'enroulement primaire.

Selon un autre mode de réalisation d'un convertisseur conforme à l'invention, il comprend soit des moyens externes au convertisseur, soit des moyens internes pour fournir une tension de référence. De façon avantageuse, ces moyens internes comprennent deux composants constitués respectivement par une diode Zener et par une résistance, reliés entre eux et reliés aux moyens de comparaison, l'un de ces deux composants étant connecté en outre la masse et l'autre aux moyens de prélèvement et de redressement.

Selon un autre mode de réalisation d'un convertisseur conforme à l'invention, les moyens permettant de prélever et de redresser la tension aux bornes de l'enroulement primaire, dont la borne centrale est reliée à l'alimentation en tension, comprennent :

- un premier condensateur relié à une borne extrême de l'enroulement primaire et un deuxième condensateur relié à l'autre borne extrême de cet enroulement,
- un pont de diode, formé de quatre diodes, les anodes d'une première et d'une deuxième diodes de ce pont étant reliées entre elles, aux moyens fournissant une tension de référence, aux moyens d'atténuation et aux moyens de comparaison et d'amplification, et les cathodes desdites première et deuxième diodes étant reliées respectivement au premier et au deuxième condensateurs, les cathodes d'une troisième et d'une quatrième diodes de ce pont étant reliées entre elles et à la masse, et les anodes desdites troisième et quatrième diodes étant reliées respectivement au premier et au deuxième condensateurs. Ce pont de diodes permet de redresser la tension alternative prélevée aux bornes de l'enroulement primaire, la tension redressée étant de polarité inverse à celle de la tension d'alimentation.

Selon une variante du mode de réalisation d'un convertisseur conforme à l'invention, les moyens permettant de prélever et de redresser la tension aux bornes de l'enroulement primaire supplémentaire comprennent un pont de diodes formé de quatre diodes et un condensateur. Les anodes d'une première et d'une deuxième diodes de ce pont sont reliées entre elles, aux moyens pour fournir une tension de référence et aux moyens d'atténuation et les cathodes desdites première et deuxième diodes sont reliées respectivement aux bornes de l'enroulement primaire supplémentaire. Les anodes d'une troisième et d'une quatrième diodes de ce pont sont reliées entre elles, au condensateur, aux moyens pour comparer et amplifier et les cathodes desdites troisième et quatrième diodes sont reliées respectivement aux bornes de l'enroulement primaire supplémentaire. Ledit condensateur est en outre relié à la masse. Ce pont de diodes permet de redresser la tension alternative prélevée aux bornes de l'enroulement primaire supplémentaire, la tension redressée étant de polarité inverse à celle de la tension d'alimentation. D'autre part, le condensateur permet de filtrer la tension redressée par la troisième et la quatrième diodes et d'alimenter par la tension filtrée résultante, les moyens de comparaison et d'amplification.

Selon un autre mode de réalisation d'un convertisseur conforme à l'invention, les moyens pour faire varier le gain du circuit de régulation en fonction de la fréquence comprennent un condensateur relié aux moyens de démarrage.

Selon un autre mode de réalisation, les moyens de démarrage comprennent deux résistances en série reliées d'une part à l'alimentation en tension continue et d'autre part aux commutateurs et aux moyens d'amplification, le condensateur des moyens pour faire varier le gain en fonction de la fréquence étant relié en parallèle de la résistance de plus grande impédance.

Selon une variante de réalisation, les moyens de démarrage comprennent un premier transistor ainsi qu'un deuxième transistor à effet de champ, le condensateur des moyens pour faire varier le gain en fonction de la fréquence étant relié à la masse et à la grille du deuxième transistor par une première résistance, ladite première résistance étant reliée en outre aux moyens d'amplification par une deuxième résistance, le drain du deuxième transistor étant relié à l'alimentation en tension continue par une troisième résistance, et la source de ce deuxième transistor étant reliée aux moyens d'amplification par une quatrième résistance et à la base du premier transistor, le collecteur du premier transistor étant connecté à l'alimentation en tension continue par une cinquième résistance et l'émetteur dudit premier transistor étant relié à une diode Zener elle-même connectée aux premier et second commutateurs.

Ces moyens de démarrage comprennent de façon avantageuse des moyens pour limiter le premier courant nécessaire au démarrage du convertisseur, ces moyens comportant un troisième transistor, la base du troisième transistor étant connectée par une sixième résistance à la fois aux moyens de commande et à une résistance variable, elle-même connectée à la masse, l'émetteur du troisième transistor étant relié à la masse et le collecteur étant relié au condensateur des moyens pour faire varier le gain en fonction de la fréquence et aux première et deuxième résistances.

D'autres caractéristiques et avantages de l'invention ressortiront mieux de la description qui va suivre, donnée à titre purement illustratif et non limitatif. La description fait référence aux figures annexées 1 à 6 dans lesquelles :
- la figure 1, déjà décrite, représente schématiquement un convertisseur symétrique connu, de type continu-continu faisant appel à un circuit de traitement ;
- la figure 2, déjà décrite, représente schématiquement un convertisseur symétrique connu, du même type, utilisant deux transistors commutateurs et un enroulement de réaction permettant la commande des transistors commutateurs ;
- la figure 3, déjà décrite, représente schématiquement le convertisseur de la figure 2 dans lequel intervient un circuit de régulation connu, agissant à partir de la tension continue obtenue au secondaire du convertisseur ;
- la figure 4 représente schématiquement un exemple d'un convertisseur conforme à l'invention, permettant d'obtenir une tension stable au secondaire, grâce à un circuit de régulation agissant à partir de la tension primaire du convertisseur ;
- la figure 5 représente schématiquement une variante du convertisseur de la figure 4, conforme à l'invention, dans laquelle intervient notamment un enroulement primaire supplémentaire ;

- la figure 6 représente de façon plus détaillée un exemple d'un convertisseur symétrique de tension à régulation primaire conforme à l'invention, comprenant également un enroulement primaire supplémentaire.

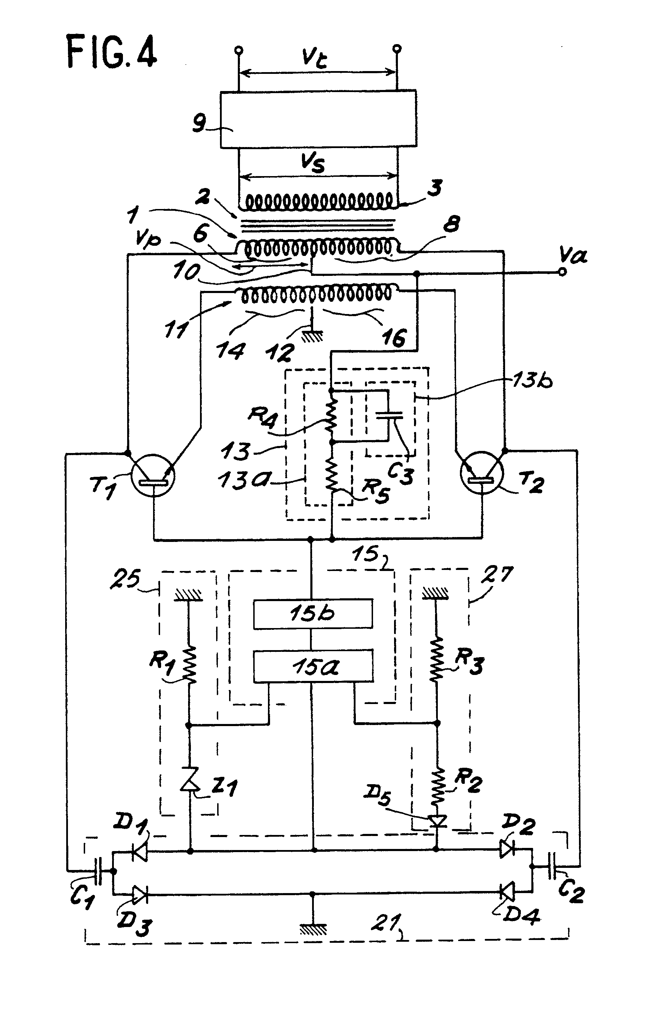

La figure 4 represente schématiquement un exemple d'un convertisseur symétrique de tension à régulation primaire, selon l'invention, permettant d'obtenir au secondaire une tension $V_t$ continue stable de valeur souhaitée.

Comme représenté dans la figure 2, on retrouve sur cette figure un convertisseur comprenant un enroulement primaire 1, et un enroulement de réaction 11, bobinés avec un enroulement secondaire 3 sur un noyau magnétique 2, deux transistors commutateurs $T_1$ et $T_2$, une alimentation en tension continue $V_a$ et un circuit de traitement 9.

Les moyens de commande des transistors $T_1$ et $T_2$ sont constitues par l'enroulement de réaction. L'enroulement primaire 1 et l'enroulement de réaction 11, comportent respectivement deux demi-enroulements 6, 8 et 14, 16 et une borne centrale 10, 12.

Le convertisseur selon l'invention comprend en outre un circuit de régulation permettant de stabiliser la tension appliquée aux bornes des deux demi-enroulements primaires 6, 8.

Ce circuit de régulation comprend des moyens 21 pour prélever la tension primaire $V_p$ aux bornes de chaque demi-enroulement primaire 6, 8 et pour la redresser, des moyens 25 pour fournir une tension de référence et des moyens 27 pour atténuer une partie de la tension prélevée et redressée, mais non filtrée ; le circuit de régulation comprend aussi des moyens 15a pour comparer la tension de référence avec la tension atténuée, des moyens 15b pour amplifier la tension résultant de cette comparaison, des moyens 13a de démarrage et des moyens 13b pour faire varier le gain du circuit de régulation en fonction de la fréquence, reliés aux moyens 13a.

Les moyens 15a de comparaison et les moyens 15b d'amplification sont généralement regroupés en un seul dispositif appelé moyens 15 de comparaison et d'amplification.

Par ailleurs, les moyens 13b étant reliés aux moyens 13a des éléments constituant les moyens 13a sont foncton des éléments constituant les moyens 13b et inversement ; de ce fait, on a regroupé sur les figures 4 à 6 les moyens 13a et 13b par un ensemble référencé 13.

Dans la suite de la description on considère la tension d'alimentation positive et les transistors commutateurs $T_1$ et $T_2$ du type NPN ; il est évident que ces transistors seraient de type PNP si la tension d'alimentation $V_a$ était négative.

Les bornes extrêmes de l'enroulement secondaire 3 sont éventuellement connectées à un circuit de traitement 9, de même type que celui représenté en figure 1 ; ce circuit permet de redresser la tension alternative $V_s$ obtenue aux bornes de l'enroulement secondaire 3 et de multiplier sa valeur pour obtenir une tension continue $V_t$ d'amplitude souhaitée.

La borne centrale 10 de l'enroulement primaire 1 est reliée à l'alimentation en tension continue $V_a$ et ses deux bornes extrêmes sont respectivement reliées aux collecteurs des transistors $T_1$ et $T_2$. La borne centrale 12 de l'enroulement de réaction 11 est connectéee à une masse de référence et les bornes extrêmes de cet enroulement 11 sont connectés aux émetteurs des transistors $T_1$ et $T_2$. Ainsi, les bornes extrêmes des demi-enroulements 6, 14 et 8, 16 sont reliées respectivement aux transistors $T_1$ et $T_2$.

Les collecteurs des transistors $T_1$ et $T_2$ sont en outre reliés, de façon distincte aux moyens 21 pour prélever et redresser la tension primaire. Les bases de ces transistors sont reliées à la fois aux moyens 15b d'amplification et aux moyens 13a de démarrage mentionnés plus haut.

Les moyens 21 pour prélever la tension aux bornes de chaque demi-enroulement primaire 6, 8 et la redresser comprennent par exemple deux condensateurs $C_1$ et $C_2$ et un pont de diodes constitué par quatre diodes $D_1$, $D_2$, $D_3$ et $D_4$.

Les condensateurs $C_1$ et $C_2$ sont connectés respectivement aux collecteurs des transistors $T_1$ et $T_2$, permettant ainsi de prélever la tension primaire aux bornes des demi-enroulements 6, 8 correspondants, et au pont de diodes.

Le pont de diodes comprend les diodes $D_1$ et $D_2$ reliées entre elles par leurs anodes et connectées respectivement aux condensateurs $C_1$ et $C_2$ par leurs cathodes, et les diodes $D_3$ et $D_4$ reliées entre elles par leurs cathodes et connectées respectivement aux condensateurs $C_1$ et $C_2$ par leurs anodes. Ce pont de diodes permet ainsi d'obtenir une tension négative sur les anodes des diodes $D_1$ et $D_2$.

Par ailleurs, les diodes $D_1$ et $D_2$ sont reliées par leurs anodes, aux moyens 25 fournissant une tension de référence, aux moyens 27 d'atténuation et aux moyens 15 de comparaison et d'amplification ; les diodes $D_3$ et $D_4$ sont reliées par leurs cathodes à la masse.

Les moyens 25 fournissant une tension de référence comprennent par exemple une diode Zener $Z_1$ de préférence du type compensée en température, et une résistance $R_1$ en série avec la diode $Z_1$. La diode Zener $Z_1$ est reliée aux anodes des diodes $D_1$ et $D_2$, et la résistance $R_1$ est reliée à la masse. Bien entendu, on aurait pu tout aussi bien relier la diode $Z_1$ à la masse et la résistance $R_1$ aux anodes des diodes $D_1$ et $D_2$. Le point de jonction de la diode Zener $Z_1$ et de la résistance $R_1$ est relié aux moyens 15a de comparaison.

Les moyens 27 pour atténuer la tension prélevée et redressée comprennent par exemple deux résistances $R_2$, $R_3$ reliées en série. L'une des résistances $R_2$ est reliée aux anodes des diodes $D_1$ et $D_2$, tandis que l'autre résistance $R_3$ est reliée à la masse. On aurait pu tout aussi bien relier la résistance $R_2$ à la masse et l'autre résistance $R_3$ aux diodes $D_1$ et $D_2$. Le point de jonction des résistances $R_2$ et $R_3$ est relié aux moyens 15a de comparaison. De façon avantageuse, ces moyens 27 comportent des moyens de compensation des dérives en température apportées par le pont de diodes $D_1$, $D_2$, $D_3$ et $D_4$. Ces moyens d'atténuation sont constitués par une diode $D_5$ reliée en série à la résistance $R_2$. Ainsi, comme représenté figure 4, la diode $D_5$ est reliée par exemple entre la résistance $R_2$ et les anodes des diodes $D_1$ et $D_2$. Pour que la compensation en température effectuée par la diode $D_5$ soit effective, il faut, dans le cas particulier de ce pont de diodes, que les résistances $R_2$ et $R_3$ soient telles que $R_2 = R_3/2$.

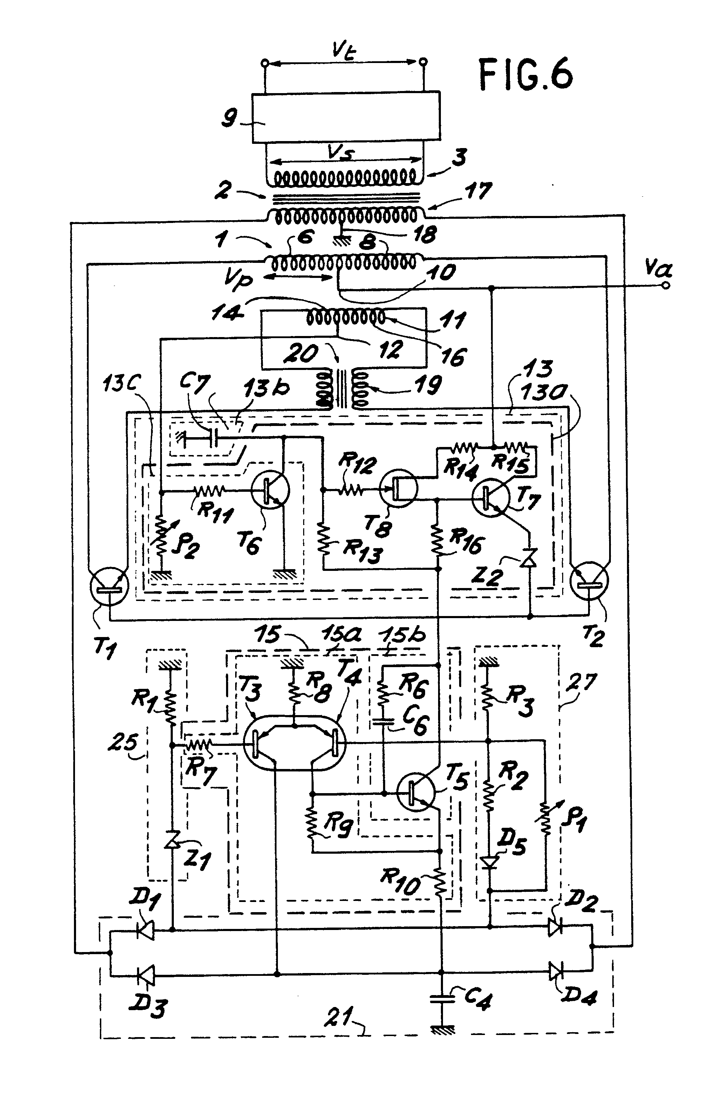

Les moyens 15a de comparaison et les moyens 15b d'amplification sont reliés entre eux, ils comprennent respectivement, par exemple deux transistors montés en amplificateur différentiel et un transistor amplificateur. Un exemple de réalisation de ces moyens 15a et 15b est décrit figure 6. Ces moyens 15b d'amplification sont reliés en outre à la fois aux bases des transistors commutateurs $T_1$ et $T_2$ et aux moyens 13a de démarrage.

Les moyens 13b pour faire varier le gain en fonction de la fréquence comprennent par exemple un condensateur $C_3$ relié aux moyens 13a de démarrage. De ce fait, les moyens 13a de démarrage comprennent, par exemple, comme représenté sur la figure 4, deux résistances $R_4$, $R_5$ reliées en série, l'une d'elles étant reliée l'alimentation en tension continue $V_a$, et l'autre aux bases des deux transistors commutateurs $T_1$ et $T_2$, le condensateur $C_3$ étant branché aux bornes de la resistance de valeur la plus élevée : c'est-à-dire la résistance $R_4$ dans la représentation de la figure 4.

Le reste de la description permet de comprendre le fonctionnement du convertisseur symétrique de tension à régulation primaire de la figure 4.

L'application alternative d'une fraction de la tension d'alimentation $V_a$ soit par le transistor $T_1$, soit par le transistor $T_2$, sur chaque demi-enroulement primaire 6 et 8 est assurée par l'enroulement de réaction 11 qui permet de rendre passants alternativement les transistors $T_1$ et $T_2$.

La tension primaire $V_p$ appliquée aux bornes d'un demi-enroulement primaire 6 ou 8 résulte de la différence entre la tension d'alimentation $V_a$ et les tensions aux bornes émetteur-collecteur du transistor $T_1$ ou du transistor $T_2$ et aux bornes d'un demi-enroulement 14 ou 16.

Le circuit de régulation du convertisseur de l'invention a pour rôle de rendre stable la tension primaire $V_p$. Comme la tension d'alimentation $V_a$ généralement peu stable est imposée, le circuit de régulation agit sur la tension aux bornes émetteur-collecteur des transistors $T_1$ et $T_2$ par l'application sur leur base d'un courant plus ou moins important réglant le niveau de conduction de ces transistors, pendant la demi-période durant laquelle ils sont passants.

La tension appliquée aux bornes de l'enroulement primaire 1 est alternative et de forme rectangulaire. Sa valeur moyenne est égale à la tension d'alimentation $V_a$ appliquée à sa borne centrale 10. Dans un premier stade, la tension primaire doit donc être prélevée, redressée et référencée à la masse. Le prélèvement et le changement de référence s'effectuent par les condensateurs $C_1$ et $C_2$, et le redressement par le pont de diodes $D_1$, $D_2$, $D_3$, $D_4$.

La polarité de la tension redressée par les diodes $D_1$ et $D_2$ est de signe opposé à celle de la tension d'alimentation $V_a$. En considérant la tension d'alimentation positive, la tension redressée est donc négative. Cette tension négative permet d'alimenter les moyens 15 de comparaison et d'amplification, ces moyens 15 devant agir sur les bases des transistors $T_1$ et $T_2$ qui ont un potentiel moyen très proche de 0 volt.

Par ailleurs, la tension redressée alimente les moyens 27 d'atténuation. Cette tension est donc atténuée par les résistances $R_2$ et $R_3$ des moyens 27 d'atténuation et va être comparée à une tension dite de référence, donc supposée stable.

Cette tension de référence est fournie par exemple par les moyens 25 alimentés par la tension redressée. La résistance $R_1$ permet de fixer la valeur du courant traversant la diode Zener $Z_1$. La tension de référence est la tension aux bornes de cette diode $Z_1$. La valeur du courant traversant la diode Zener $Z_1$ permet la compensation des dérives en température de cette diode ; la valeur de la résistance $R_1$ se déduit de la valeur de ce courant.

Les résistances $R_2$ et $R_3$ des moyens 27 d'atténuation doivent avoir des valeurs telles que lorsque la tension primaire aux bornes des demi-enroulements primaire 1 est constante, la tension d'atténuation issue des moyens 27 soit égale à la tension de référence. La différence entre la tension de référence et la tension atténuée est donc nulle, aux tensions d'erreurs près. Ces tensions d'erreurs dépendent des variations de la tension primaire.

Le rôle du circuit de régulation est donc d'amener l'image atténuée de la tension primaire $V_p$ à être sensiblement égale à la tension de référence.

Ainsi lorsque le convertisseur de l'invention est en fonctionnement, si une augmentation de la tension d'alimentation intervient, cet accroissement agit en premier sur la tension primaire, le circuit de régulation n'ayant pas encore réagi. De ce fait, la tension prélevée et redressée augmente ainsi que la tension atténuée. La tension d'erreur déterminée par les moyens 15a de comparaison, résultant de la différence entre la tension de référence et la tension atténuée ainsi que la tension d'erreur amplifiée par les moyens 15b d'amplification augmentent aussi et dans un sens tel que le potentiel de base des transistors $T_1$ et $T_2$ augmente. Ces transistors sont alors rendus moins conducteurs et vont supporter une tension émetteur-collecteur plus élevée. Autrement dit, le circuit de régulation fait supporter l'accroissement de la tension d'alimentation $V_a$ aux transistors $T_1$ et $T_2$ et la tension primaire est de ce fait constante.

Lorsque la tension d'alimentation décroît, la tension prélevée et redressée diminue entraînant une augmentation de la tension d'erreur amplifiée dans un sens tel que le potentiel de base des transistors $T_1$ et $T_2$ augmente. Ces transistors sont alors plus conducteurs et la diminution de la tension d'alimentation est donc supportée par la tension émetteur-collecteur des transistors qui diminue pour que la tension primaire soit constante.

Lorsque la tension d'alimentation décroît jusqu'à la valeur de la tension primaire $V_p$ à stabiliser, le circuit de régulation ne peut plus agir.

Pour faire varier le potentiel de base des transistors $T_1$ et $T_2$ en fonction de la tension d'erreur amplifiée, les moyens d'amplification agissent en association avec les moyens 13a de démarrage.

La sortie des moyens d'amplification peut être assimilée à un générateur de courant, ce courant étant une image amplifiée de la tension d'erreur issue de la comparaison effectuée par les moyens 15a. Les moyens 13a, de démarrage, constituent la charge que traverse ce courant. De ce fait le courant alimentant les bases des transistors $T_1$ et $T_2$ est égal à la différence entre le courant prélevé par les moyens 13a de démarrage sur l'alimentation en tension continue positive et le courant extrait par les moyens 15b d'amplification alimentés par la tension prélevée et redressée négative.

Le gain de la boucle d'asservissement, autrement dit du circuit de régulation, est directement fonction de la valeur de la charge constituée par les moyens 13a de démarrage.

Les moyens 13a de démarrage représentés sur la figure 4 présentent une impédance qui varie en fonction de la fréquence du fait de la présence du condensateur $C_3$ des moyens 13b relié aux moyens 13a. Il en résulte que le gain de la boucle d'asservissement diminue quand la fréquence augmente. A basse fréquence le gain de cette boucle dépend des valeurs des résistances $R_4$ et $R_5$. A plus haute fréquence, ce gain dépend seulement de la résistance $R_5$.

Dans le cas d'un convertisseur connu, comme celui représenté figure 3 ou décrit dans le document FR-A-2 178 866, il faut un certain temps pour que, lorsque la tension d'alimentation $V_a$ varie rapidement, le circuit de régulation atteigne un nouvel état d'équilibre tenant compte de la variation de la tension d'alimentation $V_a$. Ceci résulte de ce que la tension d'erreur est élaborée à partir d'une tension filtrée.

Dans le convertisseur conforme l'invention, une variation rapide de la tension d'alimentation $V_a$ se traduit instantanément par une variation de la tension primaire, donc de la tension prélevée, et par suite de la tension redressée, car celle-ci n'est pas filtrée. La tension résultante appliquée sur les bases des transistors $T_1$ et $T_2$ se modifie donc également. Toutefois, si le circuit de régulation réagit instantanément, ce circuit a un gain faible à haute fréquence, les variations de courant imposées en sortie des moyens 15b d'amplification ne s'exerçant que sur la résistance $R_5$ des moyens 13a de démarrage. L'ensemble constitué par la résistance $R_4$ et le condensateur $C_3$ possède, en effet, une constante de temps assez grande pour ne pas être affectée par une variation rapide de courant.

Il serait avantageux de garder un gain important à fréquence élevée, mais on se heurterait alors aux critères usuels de stabilité des systèmes bouclés. Quoi qu'il en soit, cette possibilité de réaction rapide du circuit de régulation constitue une originalité du convertisseur conforme à l'invention.

Les moyens 13a de démarrage permettent aussi de faire démarrer le convertisseur de l'invention. Pour mieux expliquer ce rôle des moyens 13a, on envisage dans la suite de la description le cas où le convertisseur est destiné à charger un condensateur ou un ensemble capacitif, à partir de la tension obtenue au secondaire du convertisseur, étant bien entendu que cet exemple n'est pas limitatif.

Le condensateur étant initialement déchargé, il nécessite au démarrage un courant important pour acquérir des charges électriques. Dans une première phase, la tension aux bornes du condensateur évolue vers la valeur souhaitée, fixée par la tension de référence choisie issue des moyens 25 et, dans une deuxième phase, le condensateur atteint cette valeur. Lors de la seconde phase, le courant à fournir au condensateur est quasiment nul.

Il s'ensuit que pendant la première phase, un courant important doit traverser les transistors $T_1$ et $T_2$. L'alimentation des bases de ces transistors doit être suffisante. Les moyens 15b d'amplification sont sous-alimentés et ne prélèvent aucun courant. Le courant alimentant les bases des transistors provient donc uniquement du courant prélevé par les moyens 13a de démarrage sur l'alimentation en tension.

Lorsque la première phase est atteinte, le courant de base des transistors $T_1$ et $T_2$ diminue, le courant prélevé par les moyens 13a sur l'alimentation étant détourné en grande partie des bases des transistors $T_1$ et $T_2$, par les moyens 15b d'amplification qui prélèvent un courant plus au moins important en fonction de la tension d'erreur amplifiée. Le type et la valeur des éléments constituant ces moyens 13a de démarrage sont donc choisis de façon à assurer à la fois le démarrage du convertisseur et au cours du fonctionnement du convertisseur, la charge des moyens d'amplification.

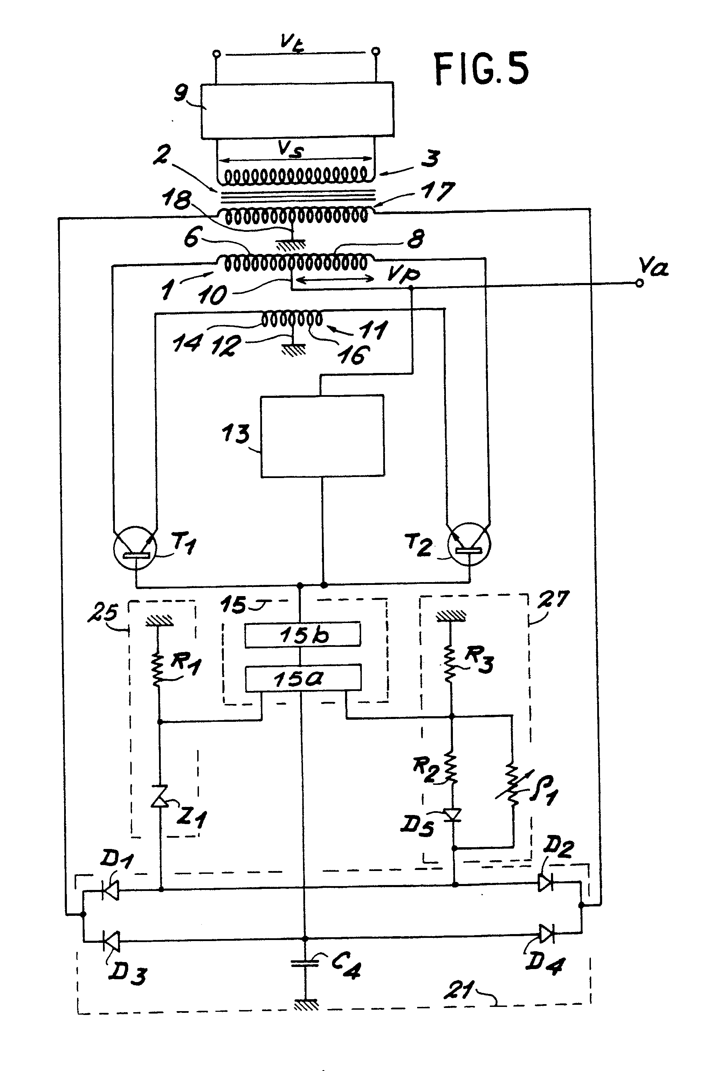

La figure 5 représente schématiquement un autre exemple de réalisation du convertisseur symétrique de tension conforme à l'invention. Il se différencie du convertisseur représenté figure 4, notamment par l'utilisation d'un enroulement primaire supplémentaire 17 bobiné avec un enroulement primaire 1 sur un noyau magnétique 2.

Cet enroulement supplémentaire 17 est strictement identique à l'enroulement primaire 1 : il comporte le même nombre de spires et a la même disposition sur le noyau 2. Ceci est facilité par le faible nombre de spires (28 par exemple) et la technique de bobinage dite "deux fils en main".

Ce convertisseur comprend donc un enroulement primaire 1, un enroulement primaire 17 supplémentaire, un enroulement de réaction 11 et un enroulement secondaire 3. Ces différents enroulements 1, 17, 11, 3 sont bobinés autour d'un noyau magnétique 2. Les bornes extrêmes de l'enroulement primaire 17 supplémentaire, sont connectées respectivement à des moyens 21 pour prélever et redresser la tension aux bornes de l'enroulement supplémentaire 17, cette tension étant équivalente à la tension aux bornes de l'enroulement primaire ; on appellera également tension primaire $V_p$ la tension aux bornes des deux demi-enroulements de l'enroulement supplémentaire.

Les bornes extrêmes de l'enroulement primaire 1 et de l'enroulement de réaction 11 sont respectivement connectées de façon distincte à deux transistors commutateurs $T_1$ et $T_2$, de la même façon que dans le mode de réalisation de la figure 4.

Les transistors $T_1$ et $T_2$ sont connectés en outre par leur base à un ensemble 13 et à des moyens 15b d'amplification eux-mêmes connectés à des moyens 15a de comparaison. Cet ensemble 13 comprend des moyens 13a de démarrage reliés à des moyens 13b pour faire varier le gain du circuit de régulation en fonction de la fréquence. De plus, des moyens 25 pour fournir une tension de référence et des moyens 27 d'atténuation sont connectés aux moyens 21 de prélèvement et de redressement et aux moyens 15a de comparaison.

Les moyens 15a de comparaison et les moyens 15b d'amplification sont généralement regroupés en des moyens 15 de comparaison et d'amplification, ces moyens 15 étant reliés aux moyens 21 de prélèvement et de redressement.

Le point milieu 10 de l'enroulement 1 reçoit la tension d'alimentation $V_a$ tandis que le point milieu 18 de l'enroulement supplémentaire 17 est relié à la masse.

Le prélèvement de la tension primaire, au lieu de s'effectuer aux bornes de l'enroulement primaire 1 par l'intermédiaire des condensateurs $C_1$ et $C_2$, comme représenté figure 4, s'effectue donc directement aux bornes de l'enroulement supplémentaire 17 sans l'aide de condensateurs. Cet enroulement 17 permet d'obtenir directement après redressement de la tension prélevée à ses bornes extrêmes, une tension de polarité inverse à celle de la tension d'alimentation.

Les moyens 21 de prélèvement et de redressement de tensions comprennent par exemple un pont de quatre diodes $D_1$, $D_2$, $D_3$ et $D_4$ et un condensateur $C_4$. Les diodes $D_1$ et $D_2$ sont reliées entre elles par leurs anodes et les diodes $D_3$ et $D_4$ sont reliées entre elles également par leurs anodes. Les diodes $D_1$ et $D_3$ sont reliées à l'une des bornes extrêmes de l'enroulement primaire 17 supplémentaire par leurs cathodes. Les diodes $D_2$ et $D_4$ sont reliées à l'autre borne extrême de l'enroulement 17 également par leurs cathodes. Le condensateur $C_4$ est relié aux anodes des diodes $D_3$ et $D_4$ et à la masse.

Ce pont de diodes permet d'obtenir deux tensions redressées, de polarité inverse à celle de la tension d'alimentation. Les diodes $D_1$ et $D_2$ effectuent un redressement non filtré de la tension prélevée aux bornes de l'enroulement 17, tandis que la tension redressée par les diodes $D_3$ et $D_4$ est filtrée par le condensateur $C_4$. Cette tension redressée et filtrée présente sur les anodes des diodes $D_3$ et $D_4$, est utilisée pour alimenter les moyens 15 de comparaison et d'amplification. La tension issue du redressement non filtré présente sur les anodes des diodes $D_1$ et $D_2$, est utilisée comme dans la figure 4 pour alimenter les moyens 25 fournissant une tension de référence, et les moyens 27 d'atténuation.

Les moyens 25 pour fournir une tension de référence sont par exemple les mêmes que ceux représentés figure 4.

Les moyens 27 d'atténuation comprennent par exemple, en plus des résistances $R_2$ et $R_3$ et de la diode $D_5$ représentées figure 4, une résistance variable $p_1$ reliée en parallèle avec la résistance $R_2$ et la diode $D_5$.

Pour que la compensation en température effectuée par la diode $D_5$ soit effective, il faut que les résistances $R_2$ et $R_3$ soient d'égales valeurs dans le cas particulier de ce pont de diodes. La résistance $\rho_1$ permet un ajustement de la valeur de la tension stabilisée en sortie de l'enroulement secondaire en modifiant le rapport d'atténuation. Cette résistance $\rho_1$ est surtout utile lorsque la tension de référence est issue d'une diode Zener $Z_1$ comme c'est le cas dans les exemples décrits.

Les moyens 13a et 13b de démarrage et pour faire varier le gain en fonction de la fréquence (non représentés) sont par exemple du même type que ceux décrits figure 4.

Le fonctionnement du convertisseur représenté figure 5 est le même que celui décrit figure 4.

La figure 6 représente un exemple d'un convertisseur symétrique de tension à régulation primaire conforme à l'invention comprenant également un enroulement primaire supplémentaire. Sur cette figure, un exemple de réalisation des moyens 13a de démarrage, des moyens 15a de comparaison et des moyens 15b d'amplification, est représenté en détail.

Les moyens identiques aux moyens utilisés dans les convertisseurs déjà décrits en référence aux figures 4 ou 5 ne seront pas exposés ici en détail.

Sur cette figure apparaissent notamment deux enroulements 19 bobinés sur un noyau magnétique 20 généralement en ferrite. Chacun de ces enroulements 19 est connecté respectivement d'une part à une borne extrême de l'enroulement de réaction 11 et, d'autre part, à l'émetteur de l'un des transistors commutateurs $T_1$, $T_2$. Ces enroulements 19 ont pour but de supprimer des oscillations parasites hautes fréquences. Ces oscillations dépendent en particulier du câblage et des composants utilisés dans le convertisseur. L'utilisation de tels enroulements est connue dans l'état de la technique.

Les moyens 15a de comparaison comprennent un étage différentiel constitué par exemple de deux transistors $T_3$ et $T_4$ de type PNP, et les moyens 15b d'amplification comprennent un étage amplificateur constitué par exemple d'un transistor $T_5$ de type NPN dont la charge de collecteur est assurée par les moyens 13a de démarrage.

Les émetteurs des transistors $T_3$ et $T_4$ des moyens 15a de comparaison, sont reliés entre eux et à la masse par une résistance $R_8$. La base du transistor $T_3$ est reliée aux moyens 25 fournissant une tension de référence par une résistance $R_7$. Le collecteur du transistor $T_3$ est directement relié aux anodes des diodes $D_3$, $D_4$ et au condensateur $C_4$. Le collecteur du transistor $T_4$ est relié d'une part aux anodes des diodes $D_3$, $D_4$ et au condensateur $C_4$ par des résistances $R_9$ et $R_{10}$ reliées en série et d'autre part aux moyens 15b d'amplification. La base du transistor $T_4$ est reliée aux moyens 27 d'atténuation.

La base du transistor $T_5$ des moyens 15b d'amplification est reliée au collecteur du transistor $T_4$ et l'émetteur de ce transistor est relié aux anodes des diodes $D_3$ et $D_4$ et au condensateur $C_4$ par la résistance $R_{10}$. Le collecteur du transistor $T_5$ est relié aux moyens 13a de démarrage. Une résistance $R_6$ et un condensateur $C_6$ reliés en série sont respectivement connectés entre le collecteur et la base du transistor $T_5$.

Les moyens 13a de démarrage comprennent par exemple deux transistors $T_6$ et $T_7$ de type NPN et un transistor $T_8$ à effet de champ, du type canal N à jonction.

Le collecteur du transistor $T_7$ est connecté à l'alimentation en tension continue $V_a$ par l'intermédiaire d'une résistance $R_{15}$, l'émetteur de ce transistor est relié à une diode Zener $Z_2$ elle-même connectée aux bases des transistors commutateurs $T_1$ et $T_2$ et La base du transistor $T_7$ est reliée à la source du transistor à effet de champ $T_8$ et aux moyens 15b d'amplification par une résistance $R_{16}$.

Le transistor $T_8$ est connecté par son drain à l'alimentation en tension continue $V_a$, par l'intermédiaire d'une résistance $R_{14}$. La grille de ce transistor est reliée par une résistance $R_{12}$ de protection, au collecteur du transistor $T_5$ par l'intermédiaire d'une résistance $R_{13}$, à des moyens 13b pour faire varier le gain du circuit de régulation en fonction de la fréquence et au collecteur du transistor $T_6$.

L'émetteur du transistor $T_6$ est connecté à la masse et la base de ce transistor est reliée par une résistance $R_{11}$ de protection à la borne centrale 12 de l'enroulement de réaction 11 et à une résistance variable $\rho_2$. Cette résistance $\rho_2$ est elle-même reliée à la masse.

Le transistor $T_6$ ainsi que les résistances $R_{11}$ et $\rho_2$ forment les moyens 13c pour limiter le courant de démarrage des moyens 13a de démarrage.

Par ailleurs, sur cette figure les moyens 13b comprennent un condensateur $C_7$ relié d'une part à la masse et d'autre part au collecteur du transistor $T_6$, à la grille du transistor $T_8$ par la résistance $R_{12}$.

Dans cet exemple de réalisation, la tension primaire $V_p$ appliquée aux bornes d'un demi-enroulement 6 ou 8 résulte de la différence entre la tension d'alimentation $V_a$ et les tensions aux bornes émetteur-collecteur du transistor $T_1$ ou $T_2$, aux bornes d'un demi-enroulement 14 ou 16 et aux bornes de la résistance variable $\rho_2$.

La suite de la description permet de comprendre le rôle des différents composants des moyens 15 de comparaison et d'amplification, des moyens 13a de démarrage et des moyens 13b.

Les transistors $T_3$ et $T_4$ montés en différentiel reçoivent respectivement sur leurs bases la tension de référence issue des moyens 25 et la tension atténuée issue des moyens 27. Cette tension atténuée est obtenue comme décrit précédemment à partir de la tension prélevée aux bornes de l'enroulement supplémentaire 17 puis redressée par les diodes $D_1$ et $D_2$ des moyens 21, et enfin atténuée par les résistances $R_2$, $R_3$ et $\rho_1$ 1 des moyens 27. La résistance $R_7$ permet d'égaliser les impédances d'entrée sur les bases des transistors $T_3$ et $T_4$. La différence entre la tension atténuée et la tension de référence est élaborée par les transistors $T_3$ et $T_4$, elle est ensuite amplifiée par la résistance $R_9$ placée dans le collecteur du transistor $T_4$ puis par le transistor $T_5$.

Une tension proportionnelle à la tension amplifiée par les moyens 15b est alors appliquée à la base du transistor $T_7$, monté en émetteur suiveur, qui commande par la diode Zener $Z_2$, les bases des transistors commutateurs $T_1$ et $T_2$.

L'association de la résistance $R_6$ et du condensateur $C_6$ reliés en série et en contre-réaction collecteur-base sur le transistor $T_5$, a pour but d'atténuer le gain de celui-ci à fréquence élevée.

L'ensemble formé par le transistor $T_8$ associé aux résistances $R_{13}$, $R_{16}$ des moyens de démarrage, constitue la charge de collecteur du transistor $T_5$ des moyens 15b d'amplification déjà décrits ; cet ensemble assure donc le gain en tension du transistor $T_5$ et donc le gain du circuit de régulation.

A basse fréquence, l'ensemble constitué par le transistor $T_8$, les résistances $R_{13}$ et $R_{16}$ est réduit au transistor $T_8$ à effet de champ polarisé par sa résistance de source $R_{16}$. En effet, le condensateur $C_7$ n'a, alors, pas d'action et grâce à la forte impédance d'entrée du transistor $T_8$, la résistance $R_{13}$ ne joue également aucun rôle. A ces fréquences basses, cet ensemble se réduit donc à un générateur de courant, c'est-à-dire à une résistance de valeur très élevée.

La charge du transistor $T_5$, à basse fréquence, est donc élevée et le gain en tension du transistor $T_5$ est également élevé.

A fréquence plus élevée, le condensateur $C_7$ peut être considéré comme un court-circuit. La charge de collecteur du transistor $T_5$ est alors constituée par la résistance $R_{13}$ et par la résistance $R_{16}$ à laquelle s'ajoute la résistance d'entrée de source du transistor $T_8$ à effet de champ, cette résistance $R_{16}$ et cette résistance d'entrée de source étant en parallèle de la résistance $R_{13}$. Le transistor $T_8$ se trouve monté selon un circuit dit de "grille à la masse".

A ces fréquences élevées, bien que la charge du collecteur du transistor $T_5$ soit nettement plus faible qu'aux fréquences basses, elle est suffisante pour permettre au circuit de régulation de réagir, ainsi qu'il a déjà été mentionné à propos des moyens 13a de démarrage beaucoup plus simples, représentés figure 4.

Dans cet exemple, au démarrage du convertisseur la tension d'erreur amplifiée étant nulle, la tension appliquée entre la source et la grille du transistor $T_8$ est nulle, le transistor $T_8$ est passant et commande la conduction du transistor $T_7$ ; le courant prélevé sur l'alimentation en tension $V_a$ passe donc par la résistance $R_{15}$ puis par le transistor $T_7$ et la diode $Z_2$ avant d'être appliqué aux bases des transistors $T_1$ et $T_2$.

Au cours du fonctionnement, comme on le verra le transistor $T_6$ est bloqué ; lorsque la tension d'erreur amplifiée est non nulle, la tension entre la grille et la source du transistor $T_8$ est négative, le transistor $T_8$ est alors moins conducteur entraînant une baisse de conductivité du transistor $T_7$. De ce fait, le courant prélevé sur l'alimentation en tension diminue. Une partie du courant prélevé sur l'alimentation en tension continue est extrait par les moyens 15b d'amplification par l'intermédiaire de la résistance $R_{14}$, du transistor $T_8$ et de la résistance $R_{16}$ et l'autre partie est appliquée aux bases des transistors $T_1$ et $T_2$ par l'intermédiaire de la résistance $R_{15}$, du transistor $T_7$ et de la diode $Z_2$.

Par ailleurs, lorsque le convertisseur est utilisé pour charger, à partir de la tension obtenue au secondaire, un condensateur ou un ensemble capacitif, comme on l'a vu précédemment, la phase de démarrage du convertisseur nécessite un courant important. Cette absorption importante de courant peut être désastreuse aussi bien pour le convertisseur que pour la tension d'alimentation $V_a$. Le transistor $T_6$ et la résistance variable $\rho_2$ des moyens 13c permettent de limiter ce courant à une valeur acceptable.

En effet, ce courant traverse alternativement les transistors $T_1$ et $T_2$ et retourne à la masse par exemple comme représenté figure 6, par la borne centrale 12 de l'enroulement 11 et par la résistance $\rho_2$. La tension aux bornes de la résistance $\rho_2$ est une mesure du courant absorbé par le convertisseur. Lorsque la tension aux bornes de cette résistance dépasse le seuil de conduction de la base du transistor $T_6$, celui-ci entre progressivement en conduction et abaisse le potentiel de la grille du transistor $T_8$ à effet de champ, le potentiel de la source du transistor $T_8$ et le potentiel de base du transistor $T_7$. La tension entre la grille et la source du transistor $T_8$ reste nulle et le transistor $T_7$ devient moins conducteur. De ce fait, le courant prélevé sur l'alimentation en tension $V_a$ et appliqué aux bases des transistors $T_1$ et $T_2$ diminue. Cette baisse de courant a pour conséquence une plus grande résistance de ces transistors $T_1$ et $T_2$ au passage du courant entre collecteur-émetteur. Le résultat est donc atteint. Le transistor $T_6$ permet donc d'obtenir un courant constant dans le convertisseur au démarrage dudit convertisseur. La résis-

tance variable $\rho_2$ est ajustée en fonction du temps de charge et de la valeur de la charge.

Au cours du fonctionnement du convertisseur, le courant à fournir au condensateur étant quasiment nul, le transistor $T_6$ est bloqué.

Pour que l'action du transistor $T_6$ soit efficcace, il faut que le potentiel de son collecteur soit positif. C'est le rôle de la diode Zener $Z_2$.

Les résistances $R_{11}$ et $R_{12}$ sont des résistances de protection tandis que les résistances $R_{14}$ et $R_{15}$ permettent de limiter la dissipation d'énergie des transistors $T_7$ et $T_8$, notamment au démarrage du convertisseur. La résistance $R_{13}$ permet selon sa valeur, de choisir un condensateur $C_7$ de valeur assez faible.

Les exemples de réalisation du convertisseur conforme à l'invention, décrits sur les figures 4, 5 et 6, ne sont pas limitatifs, des modifications peuvent être apportées à ces circuits et notamment aux différents moyens cités sans pour autant sortir du cadre de l'invention.

En particulier, l'enroulement de réaction 11 permet de commander alternativement les transistors de commutation, mais d'autres moyens de commande peuvent être envisagés sans sortir du cadre de l'invention. Ces moyens de commande peuvent être bien entendu extérieurs au convertisseur.

Sur les différentes figures 4, 5 et 6 représentées, la borne centrale de l'enroulement primaire est reliée à l'alimentation en tension continue et la borne centrale de l'enroulement de réaction est reliée à la masse, mais bien entendu on aurait pu faire l'inverse.

D'autre part, la diode $D_5$ permettant une compensation en température du pont de diodes $D_1$, $D_2$, $D_3$, $D_4$ peut être remplacée par tout autre moyen permettant cette compensation.

Les moyens 25 constitués par une résistance $R_1$ et une diode $Z_1$ constituent une manière simple d'obtenir une tension de référence, mais cet exemple n'est pas limitatif, d'autres moyens 25 peuvent être envisagés sans sortir du cadre de l'invention. La tension de référence peut être notamment obtenue par des moyens extérieurs au convertisseur n'utilisant pas la tension prélevée et redressée par les moyens 21.

Par ailleurs, les émetteurs des transistors $T_3$ et $T_4$ peuvent être reliés par la résistance $R_8$, soit à la masse comme représenté figure 6, soit à une tension d'alimentation, $V_a$ par exemple. Ce branchement peut aussi être réalisé au point commun aux anodes des diodes $D_3$ et $D_4$, et du condensateur $C_4$. Dans ce cas, les transistors $T_3$ et $T_4$ doivent être de type NPN et des modifications sont alors nécessaires par ailleurs.

On peut ainsi envisager le cas où les émetteurs des transistors $T_3$ et $T_4$ de la figure 6 sont reliés entre eux et à une tension d'alimentation par la résistance $R_8$, la base du transistor $T_3$ est reliée à une masse et le collecteur de ce transistor $T_3$ est relié aux anodes des diodes $D_3$ et $D_4$ et au condensateur $C_4$ ; de plus, la base du transistor $T_4$ est reliée aux moyens 27 d'atténuation et aux moyens fournissant une tension de référence par l'intermédiaire des moyens 27, et le collecteur du transistor $T_4$ est relié à la base du transistor $T_5$. Dans ce cas, la tension de référence est alors directement opposée à la tension prélevée et redressée, la comparaison par les moyens 15a de comparaison s'effectuant alors par rapport à la tension en sortie des moyens 27 d'atténuation et la masse.

Dans les exemples de réalisation de l'invention, on a représenté l'enroulement de réaction relié aux émetteurs des transistors commutateurs mais bien entendu, ce mode de connexion n'est pas limitatif. Cet enroulement de réaction peut en effet être placé dans le circuit de base de ces transistors.

Le convertisseur symétrique de tension à régulation primaire, conforme à l'invention est de structure simple et permet d'éviter toute contrainte liée au prélèvement d'une partie de la tension obtenue au secondaire. Le convertisseur permet également de choisir la polarité de la tension obtenue au secondaire et d'ajuster sa valeur dans de grandes limites (dans un rapport allant jusqu'à 20). Sa boucle d'asservissement à réponse rapide permet un contrôle à l'intérieur même de la période de fonctionnement du convertisseur améliorant, de ce fait, la forme d'onde.

## Revendications

1. Convertisseur symétrique de tension à régulation primaire, comprenant :
   - au moins un enroulement primaire (1) comportant deux demi-enroulements primaires (6, 8) et une borne centrale (10), ainsi qu'un enroulement secondaire (3), ces enroulements (1, 3) primaire et secondaire étant bobinés sur un noyau magnétique (2),
   - au moins une alimentation en tension continue ($V_a$),
   - un premier et un second commutateurs ($T_1$, $T_2$) connectés respectivement à une borne extrême de l'enroulement primaire (1), lesdits commutateurs appliquant alternativement aux bornes de chaque demi-enroulement primaire (6, 8) une tension primaire ($V_p$) correspondant à une fraction de la tension d'alimentation continue ($V_a$), ladite tension primaire in-

duisant une tension secondaire alternative ($Y_s$) dans l'enroulement secondaire (3),
- des moyens de commande (11) des commutateurs, lesdits moyens de commande étant connectés aux commutateurs ($T_1$, $T_2$) et permettant de faire fonctionner alternativement lesdits commutateurs,
- un circuit de régulation comportant :
- des moyens (21) pour prélever et redresser une tension égale à la tension aux bornes de l'enroulement primaire (1),
- des moyens (27) pour atténuer la tension prélevée et redressée, lesdits moyens d'atténuation étant connectés aux moyens de prélèvement et de redressement,
- des moyens (15a) pour comparer une tension de référence avec la tension atténuée pour en extraire une tension d'erreur, ladite tension d'erreur correspondant à la différence entre la tension de référence (25) et la tension atténuée, ces moyens (15a) recevant la tension de référence et étant connectés aux moyens d'atténuation,
- des moyens (15b) pour amplifier la tension d'erreur, lesdits moyens étant connectés aux moyens de comparaison,
- des moyens de démarrage (13a) reliés à l'alimentation en tension continue, aux moyens d'amplification et aux commutateurs, pour faire démarrer le convertisseur,

caractérisé en ce que les moyens de démarrage alimentent lesdits commutateurs par un premier courant prélevé par les moyens de démarrage sur l'alimentation en tension continue et pour constituer une charge des moyens d'amplification au cours du fonctionnement du convertisseur, afin que les commutateurs soient alimentés par un deuxième courant égal à la différence entre le premier courant prélevé par les moyens de démarrage et un courant proportionnel à la tension d'erreur amplifiée, extrait par les moyens d'amplification sur le premier courant, les courants alimentant les commutateurs réglant le niveau de conduction desdits commutateurs au cours de leur fonctionnement, le gain du circuit de régulation étant fixé par lesdits moyens de démarrage, le circuit de régulation comportant en outre des moyens (13b) pour faire varier le gain du circuit de régulation en fonction de la fréquence de façon à faire diminuer le gain quand la fréquence augmente, ce gain étant suffisant à fréquence élevée pour permettre le contrôle du convertisseur dans sa période de fonctionnement.

2. Convertisseur symétrique de tension à régulation primaire selon la revendication 1, caractérisé en ce que les moyens (13a) de démarrage comprennent des moyens (13c) pour limiter le premier courant nécessaire au démarrage.

3. Convertisseur symétrique de tension à régulation primaire selon la revendication 1, caractérisé en ce que les deux commutateurs ($T_1$, $T_2$) sont des transistors commutateurs, le collecteur de chaque transistor étant relié à une borne extrême correspondante de l'enroulement primaire (1) dont la borne centrale est reliée à l'alimentation en tension continue ($V_a$), la base de chaque transistor étant reliée aux moyens (13a) de démarrage et l'émetteur de chaque transistor étant relié aux moyens de commande (11).

4. Convertisseur symétrique de tension à régulation primaire selon la revendication 1, caractérisé en ce que les moyens (21) de prélèvement et de redressement sont connectés aux deux bornes extrêmes de l'enroulement primaire (1) permettant de prélever et de redresser la tension aux bornes de l'enroulement primaire (1).

5. Convertisseur symétrique de tension à régulation primaire selon la revendication 1, caractérisé en ce que les moyens (21) de prélèvement et de redressement sont connectés aux bornes extrêmes d'un enroulement primaire supplémentaire (17) identique à l'enroulement primaire (1) et bobiné avec ledit enroulement primaire (1) sur le noyau magnétique (2), une borne centrale (18) dudit enroulement primaire supplémentaire étant connecté à la masse, lesdits moyens permettant de prélever et de redresser une tension aux bornes de l'enroulement primaire supplémentaire (17), cette tension étant égale à la tension aux bornes de l'enroulement primaire (1).

6. Convertisseur symétrique de tension à régulation primaire selon la revendication 1, caractérisé en ce qu'il comprend des moyens internes (25) au convertisseur, pour fournir une tension de référence.

7. Convertisseur symétrique de tension à régulation primaire selon la revendication 6, caractérisé en ce que ces moyens internes comprenant deux composants : une diode Zener ($Z_1$) et une résistance ($R_1$), reliés entre eux et reliés aux moyens (15a) de comparaison, l'un de ces composants étant en outre connecté à la masse et l'autre étant connecté aux moyens (21) de prélèvement et de redressement.

8. Convertisseur symétrique de tension à régulation primaire selon les revendications 4 et 6, caractérisé en ce que les moyens (21) permettant de prélever et de redresser la tension aux bornes de l'enroulement primaire (1) dont la borne centrale est reliée à l'alimentation en tension, comprennent :
   - un premier condensateur ($C_1$) relié à une borne extrême de l'enroulement primaire (1) et un deuxième condensateur ($C_2$) relié à l'autre borne extrême de cet enroulement (1),
   - un pont de diode, formé de quatre diodes ($D_1$, $D_2$, $D_3$, $D_4$), les anodes d'une première et d'une deuxième diodes ($D_1$, $D_2$) de ce pont étant reliées entre elles, aux moyens (25) fournissant une tension de référence aux moyens (27) d'atténuation et aux moyens (15) de comparaison et d'amplification, et les cathodes desdites première et deuxième diodes étant reliées respectivement au premier et au deuxième condensateurs ($C_1$, $C_2$), les cathodes d'une troisième et d'une quatrième diodes ($D_3$, $D_4$) de ce pont étant reliées entre elles et à la masse, et les anodes desdites troisième et quatrième diodes étant reliées respectivement au premier et au deuxième condensateurs ($C_1$, $C_2$).

9. Convertisseur symétrique de tension à régulation primaire selon les revendications 5 et 6, caractérisé en ce que les moyens (21) permettant de prélever et de redresser la tension aux bornes de l'enroulement primaire supplémentaire (17) comprennent un pont de diodes formé de quatre diodes ($D_1$, $D_2$, $D_3$, $D_4$), les anodes d'une première et d'une deuxième diodes ($D_1$, $D_2$) de ce pont étant reliées entre elles, aux moyens (25) fournissant une tension de référence et aux moyens (27) d'atténuation, et les cathodes desdites première et deuxième diodes ($D_1$, $D_2$) étant reliées respectivement aux bornes de l'enroulement primaire supplémentaire (17), les anodes d'une troisième et d'une quatrième diodes ($D_3$, $D_4$) de ce pont étant reliées entre elles, à un condensateur ($C_4$) et aux moyens (15) de comparaison et d'amplification, et les cathodes desdites troisième et quatrième diodes étant reliées respectivement aux bornes extrêmes de l'enroulement primaire supplémentaire (17), ledit condensateur ($C_4$) étant en outre relié à la masse.

10. Convertisseur symétrique de tension à régulation primaire selon la revendication 1, caractérisé en ce que les moyens pour faire varier le gain du circuit de régulation en fonction de la fréquence comprennent un condensateur relié aux moyens de démarrage.

11. Convertisseur symétrique de tension à régulation primaire selon la revendication 10, caractérisé en ce que les moyens de démarrage (13a) comprennent deux résistances en série reliées d'une part à l'alimentation en tension continue et d'autre part aux commutateurs et aux moyens d'amplification, le condensateur ($C_3$) des moyens (13b) pour faire varier le gain en fonction de la fréquence étant relié en parallèle de la résistance de plus grande impédance.

12. Convertisseur symétrique de tension à régulation primaire selon la revendication 10, caractérisé en ce que les moyens (13a) de démarrage comprennent un premier transistor ($T_7$) ainsi qu'un deuxième transistor ($T_8$) à effet de champ, le condensateur ($C_7$) des moyens (13b) pour faire varier le gain en fonction de la fréquence étant relié à la masse et à la grille du deuxième transistor ($T_8$) par une première résistance ($R_{12}$), ladite première résistance ($R_{12}$) étant reliée en outre aux moyens (15b) d'amplification par une deuxième résistance ($R_{13}$), le drain du deuxième transistor ($T_8$) étant relié à l'alimentation en tension continue ($V_a$) par une troisième résistance ($R_{14}$) et la source de ce deuxième transistor ($T_8$) étant reliée aux moyens (15b) d'amplification par une quatrième résistance ($R_{16}$) et à la base du premier transistor ($T_7$), le collecteur du premier transistor ($T_7$) étant connecté à l'alimentation en tension continue ($V_a$) par une cinquième résistance ($R_{15}$) et l'émetteur dudit premier transistor ($T_7$) étant relié à une diode Zener ($Z_2$) elle-même connectée aux premier et second commutateurs ($T_1$, $T_2$).

13. Convertisseur symétrique de tension à régulation primaire selon les revendications 2 et 12, caractérisé en ce que les moyens pour limiter le premier courant nécessaire au démarrage comprennent un troisième transistor, la base du troisième transistor ($T_6$) étant connectée par une sixième résistance ($R_{11}$) à la fois aux moyens de commande (11) et à une résistance variable ( $\rho_2$ ) elle-même connectée à la masse, l'émetteur du troisième transistor (T₅) étant relié à la masse et le collecteur étant relié au condensateur (C₇) des moyens (13b) pour faire varier le gain en fonction de la fréquence et aux première et deuxième résistances (R₁₂, R₁₃).

## Claims

1. Symmetrical voltage converter with primary regulation, comprising:
   - at least one primary winding (1) comprising two primary half-windings (6, 8) and a central terminal (10) as well as a secondary winding (3), these primary and secondary windings (1, 3) being wound on a magnetic core (2),
   - at least one supply of direct voltage ($V_a$),
   - a first and a second switch (T₁, T₂) connected respectively to an end terminal of the primary winding (1), the said switches alternately applying to the terminals of each primary half-winding (6, 8) a primary voltage ($V_p$) corresponding to a fraction of the direct supply voltage ($V_a$), the said primary voltage inducing an alternating secondary voltage ($V_s$) in the secondary winding (3),
   - means (11) for controlling the switches, the said control means being connected to the switches (T₁, T₂) and making it possible to cause the said switches to operate alternately,
   - a regulating circuit comprising:
   - means (21) for tapping and rectifying a voltage equal to the voltage at the terminals of the primary winding (1):
   - means (27) for attenuating the tapped and rectified voltage, the said means of attenuation being connected to the tapping and rectifying means,
   - means (15a) for comparing a reference voltage with the attenuated voltage to extract an error voltage from it, the said error voltage corresponding to the difference between the reference voltage (25) and the attenuated voltage, these means (15a) receiving the reference voltage and being connected to the attenuation means,
   - means (15b) for amplifying the error voltage, the said means being connected to the comparison means,
   - starting means (13a) connected to the direct-voltage supply, to the amplification means and to the switches, in order to start the converter,
   characterised in that the starting means supply the said switches with a first current tapped by the starting means from the direct-voltage supply, in order to provide a charge for the amplification means during the operation of the converter, so that the switches are supplied with a second current equal to the difference between the first current tapped by the starting means and a current proportional to the amplified error voltage and extracted from the first current by the amplification means, the currents which supply the switches adjusting the level of conduction of the said switches during their operation, the gain of the regulating circuit being fixed by the said starting means, the regulating circuit possessing, furthermore, means (13b) for varying the gain of the regulating circuit as a function of the frequency so as to cause the gain to decrease when the frequency increases, this gain being sufficient at a high frequency to allow the control of the converter during its operating period.

2. Symmetrical voltage converter with primary regulation according to Claim 1, characterised in that the starting means (13a) comprise means (13c) for limiting the first current necessary for the starting.

3. Symmetrical voltage converter with primary regulation according to Claim 1, characterised in that the two switches (T₁, T₂) are switching transistors, the collector of each transistor being connected to a corresponding end terminal of the primary winding (1), the central terminal of which is connected to the direct-voltage supply ($V_a$), the base of each transistor being connected to the starting means (13a) and the emitter of each transistor being connected to the control means (11).

4. Symmetrical voltage converter with primary regulation according to Claim 1, characterised in that the tapping and rectifying means (21) are connected to the two end terminals of the primary winding (1) making it possible to tap and rectify the voltage at the terminals of the primary winding (1).

5. Symmetrical voltage converter with primary regulation according to Claim 1, characterised in that the tapping and rectifying means (21) are connected to the end terminals of an additional primary winding (17) identical to the primary winding (1) and wound together with the said primary winding (1) on the magnetic core (2), a central terminal (18) of the said additional primary winding being connected to earth, the said means making it possible to tap and rectify a voltage at the terminals of the additional primary winding (17), this voltage being equal to the voltage at the terminals of the primary winding (1).

6. Symmetrical voltage converter with primary regulation according to Claim 1, characterised in that it possesses means (25) internal to the converter and intended for supplying a reference voltage.

7. Symmetrical voltage converter with primary regulation according to Claim 6, characterised in that the internal means comprise two components: a Zener diode ($Z_1$) and a resistor ($R_1$), connected to one another and connected to the comparison means (15a), one of these components being furthermore connected to earth and the other being connected to the tapping and rectifying means (21).

8. Symmetrical voltage converter with primary regulation according to Claims 4 and 6, characterised in that the means (21) making it possible to tap and rectify the voltage at the terminals of the primary winding (1), the central terminal of which is connected to the voltage supply, comprise:
   - a first capacitor ($C_1$) connected to one end terminal of the primary winding (1) and a second capacitor ($C_2$) connected to the other end terminal of this winding (1),
   - a diode bridge formed from four diodes ($D_1$, $D_2$, $D_3$, $D_4$), the anodes of a first and a second diode ($D_1$, $D_2$) of this bridge being connected to one another, to the means (25) supplying a reference voltage, to the attenuation means (27) and to the comparison and amplification means (15), and the cathodes of the said first and second diodes being connected respectively to the first and second capacitors ($C_1$, $C_2$), the cathodes of a third and a fourth diode ($D_3$, $D_4$) of this bridge being connected to one another and to earth, and the anodes of the said third and fourth diodes being connected respectively to the first and second capacitors ($C_1$, $C_2$).

9. Symmetrical voltage converter with primary regulation according to Claims 5 and 6, characterised in that the means (21) making it possible to tap and rectify the voltage at the terminals of the additional primary winding (17) comprise a diode bridge formed from four diodes ($D_1$, $D_2$, $D_3$, $D_4$), the anodes of a first and a second diode ($D_1$, $D_2$) of this bridge being connected to one another, to the means (25) supplying a reference voltage and to the attenuation means (27), and the cathodes of the said first and second diodes ($D_1$, $D_2$) being connected respectively to the terminals of the additional primary winding (17), the anodes of a third and a fourth diode ($D_3$, $D_4$) of this bridge being connected to one another, to a capacitor ($C_4$) and to the comparison and amplification means (15), and the cathodes of the said third and fourth diodes being connected respectively to the end terminals of the additional primary winding (17), the said capacitor ($C_4$) being furthermore connected to earth.

10. Symmetrical voltage converter with primary regulation according to Claim 1, characterised in that the means for varying the gain of the regulating circuit as a function of the frequency comprise a capacitor connected to the starting means.

11. Symmetrical voltage converter with primary regulation according to Claim 10, characterised in that the starting means (13a) comprise two resistors in series which are connected, on the one hand, to the direct-voltage supply and, on the other hand, to the switches and amplification means, the capacitor ($C_3$) of the means (13b) for varying the gain as a function of the frequency being connected in parallel with the resistor of highest impedance.

12. Symmetrical voltage converter with primary regulation according to Claim 10, characterised in that the starting means (13a) comprise a first transistor ($T_7$) and a second transistor ($T_8$) of the field-effect type, the capacitor ($C_7$) of the means (13b) for varying the gain as a function of the frequency being connected to earth and to the grid of the second transistor ($T_8$) by means of a first resistor ($R_{12}$), the said first resistor ($R_{12}$) being connected, furthermore, to the amplification means (15b) by means of a second resistor ($R_{13}$), the drain of the second transistor ($T_8$) being connected to the direct-voltage supply ($V_a$) by means of a third resistor ($R_{14}$), and the source of this second transistor ($T_8$) being connected to the amplification means (15b) by means of a fourth resistor ($R_{16}$) and to the base of the first tran-

sistor (T$_7$), the collector of the first transistor (T$_7$) being connected to the direct-voltage supply (V$_a$) by means of a fifth resistor (R$_{15}$), and the emitter of the said first transistor (T$_7$) being connected to a Zener diode (Z$_2$) which is itself connected to the first and second switches (T$_1$, T$_2$).

13. Symmetrical voltage converter with primary regulation according to Claims 2 and 12, characterised in that the means for limiting the first current necessary for the starting comprise a third transistor, the base of the third transistor (T$_6$) being connected by means of a sixth resistor (R$_{11}$) both to the control means (11) and to a variable resistor (P$_2$) which is itself connected to earth, the emitter of the third transistor (T$_6$) being connected to earth, and the collector being connected to the capacitor (C$_7$) of the means (13b) for varying the gain as a function of the frequency and to the first and second resistors (R$_{12}$, R$_{13}$).

## Ansprüche

1. Symmetrischer Spannungswandler mit Primärregelung, enthaltend:

wenigstens eine Primärwicklung (1), die aus zwei Primär-Halbwicklungen (6, 8) mit einem zentralen Anschluß (10) besteht, sowie eine Sekundärwicklung (3), wobei die Primär-und Sekundärwicklungen (1, 3) auf einen Magnetkern (2) gewickelt sind,

wenigstens eine Gleichspannungsquelle (V$_a$),

einen ersten und einen zweiten Schalter (T$_1$, T$_2$), die jeweils mit einem Endanschluß der Primärwicklung (1) verbunden sind und die abwechselnd an die Anschlüsse jeder Primär-Halbwicklung (6, 8) eine Primärspannung (V$_p$) anlegen, die einem Teil der Versorgungsgleichspannung (V$_a$) entspricht, wobei die genannte Primärspannung in der Sekundärwicklung (3) eine Sekundärwechselspannung (V$_s$) induziert,

Schaltersteuereinrichtungen (11), die mit den Schalter (T$_1$, T$_2$) verbunden sind und es ermöglichen, diese abwechselnd zu betreiben,

eine Regelschaltung, enthaltend:

Einrichtungen (21) zum Annehmen und Gleichrichten einer der Spannung an den Anschlüssen der Primärwicklung (1) gleichen Spannung,

Einrichtungen (27) zum Dämpfen der abgenommenen und gleichgerichteten Spannung, die mit den Annahme- und Gleichrichtereinrichtungen verbunden sind,

Einrichtungen (15) zum Vergleichen einer Bezugsspannung mit der gedämpften Spannung, um eine Fehlerspannung daraus abzuleiten, die der Differenz zwischen der Bezugsspannung (25) und der gedämpften Spannung entspricht, wobei diese Einrichtungen (15a) die Bezugsspannung aufnehmen und mit den Dämpfungseinrichtungen verbunden sind,

Einrichtungen (15b) zur Verstärkung der Fehlerspannung, die mit den Vergleichseinrichtungen verbunden sind,

Anlassereinrichtungen (13a), die mit der Versorgungsgleichspannung, den Verstärkungseinrichtungen und den Schaltern verbunden sind, um den Wandler in Betrieb zu setzen,

dadurch gekennzeichnet, daß die Anlassereinrichtungen die Schalter mit einem ersten Strom versorgen, der von den Anlassereinrichtungen bei Versorgung mit Gleichspannung abgenommen wird und um eine Belastung der Verstärkungseinrichtungen während des Betriebs des Wandlers zu bilden, damit die Schalter mit einem zweiten Strom versorgt werden, der gleich der Differenz zwischen dem ersten, von den Anlassereinrichtungen abgenommenen Strom und einem zweiten Strom ist, der proportional der verstärkten Fehlerspannung ist, die von den Verstärkungseinrichtungen über den ersten Strom abgeleitet wird, wobei die Ströme, die die Schalter versorgen, den Leitfähigkeitszustand dieser Schalter während ihres Betriebs regeln, die Verstärkung der Regelschaltung durch die Anlassereinrichtungen festgelegt ist, die Regelschaltung weiterhin Einrichtungen (13b) zum Variieren der Verstärkung der Regelschaltung in Anhängigkeit von der Frequenz aufweist derart, daß die Verstärkung vermindert wird, wenn die Frequenz steigt, wobei diese Verstärkung bei erhöhter Frequenz ausreichend ist, um die Steuerung des Wandlers in seiner Betriebsperiode zu ermöglichen.

2. Symmetrischer Spannungswandler mit Primärregelung nach Anspruch 1, dadurch gekennzeichnet, daß die Anlassereinrichtungen (13a) Einrichtungen (13c) zum Begrenzen des zum Anlassen notwendigen Primärstroms enthalten.

3. Symmetrischer Spannungswandler mit Primärregelung nach Anspruch 1, **dadurch gekennzeichnet**, daß die zwei Schalter ($T_1$, $T_2$) Schalttransistoren sind, wobei der Kollektor eines jeden Transistors mit einem zugehörigen Endanschluß der Primärwicklung (1) verbunden ist, deren Mittenanschluß mit der Gleichspannungsquelle ($V_a$) verbunden ist, die Basis eines jeden Transistors mit den Anlassereinrichtungen (13a) verbunden ist und der Emitter eines jeden Transistors mit den Steuereinrichtungen (11) verbunden ist.

4. Symmetrischer Spannungswandlung mit Primärregelung nach Anspruch 1, **dadurch gekennzeichnet**, daß die Abnahme- und Gleichrichtereinrichtungen (21) mit den zwei Endanschlüssen der Primärwicklung (1) verbunden sind, was die Abnahme und Gleichrichtung der Spannung an den Anschlüssen der Primärwicklung (1) ermöglicht.

5. Symmetrischer Spannungswandler mit Primärregelung nach Anspruch 1, **dadurch gekennzeichnet**, daß die Abnahme- und Gleichrichtereinrichtungen (21) mit den Endanschlüssen einer zusätzlichen Primärwicklung (17) verbunden sind, die identisch der Primärwicklung (1) ist und mit der Primärwicklung (1) auf den Magnetkern (2) gewickelt ist, wobei ein Mittenanschluß (18) der genannten zusätzlichen Primärwicklung mit Masse verbunden ist, wobei die Einrichtungen die Annahme und Gleichrichtung einer Spannung an den Anschlüssen der zusätzlichen Primärwicklung (17) ermöglichen, die gleich der Spannung an den Anschlüssen der Primärwicklung (1) ist.

6. Symmetrischer Spannungswandler mit Primärregelung nach Anspruch 1, **dadurch gekennzeichnet**, daß er innere Einrichtungen (25) im Wandler enthält, um eine Bezugsspannung zu liefern.

7. Symmetrischer Spannungswandler mit Primärregelung nach Anspruch 6, **dadurch gekennzeichnet**, daß die inneren Einrichtungen zwei Bauelemente enthalten: eine Zehnerdiode ($Z_1$) und einen Widerstand ($R_1$), die miteinander und mit den Vergleichseinrichtungen (15a) verbunden sind, wobei das eine dieser Bauelemente weiterhin mit Masse und das andere mit den Abnahme- und Gleichrichtereinrichtungen (21) verbunden ist.

8. Symmetrischer Spannungswandler mit Primärregelung nach den Ansprüchen 4 und 6, **dadurch gekennzeichnet**, daß die Einrichtungen (21), die die Abnahme und Gleichrichtung der Spannung an den Anschlüssen der Primärwicklung (1) ermöglichen, deren Mittenanschluß mit der Spannungsquelle verbunden ist, enthalten:

einen ersten Kondensator ($C_1$), der mit einem Endanschluß der Primärwicklung (1) verbunden ist, und einen zweiten Kondensator ($C_2$), de mit dem anderen Endanschluß dieser Wicklung (1) verbunden ist,

eine Diodenbrücke aus vier Dioden ($D_1$, $D_2$, $D_3$, $D_4$), wobei die Anoden einer ersten und einer zweiten Diode ($D_1$, $D_2$) dieser Brücke miteinander, mit den eine Bezugsspannung liefernden Einrichtungen (25), mit den Dämpfungseinrichtungen (27) und den Vergleichs- und Verstärkungseinrichtungen (15) verbunden sind, wobei die Kathoden dieser ersten und zweiten Dioden mit dem ersten bzw. dem zweiten Kondensator ($C_1$, $C_2$) verbunden sind, die Kathoden einer dritten und einer vierten Diode ($D_3$, $D_4$) dieser Brücke miteinander und mit Masse verbunden sind, und die Anoden dieser dritten und vierten Dioden mit den ersten bzw. zweiten Kondensatoren ($C_1$, $C_2$) verbunden sind.

9. Symmetrischer Spannungswandler mit Primärregelung nach den Ansprüchen 5 und 6, **dadurch gekennzeichnet**, daß die Einrichtungen (21), die eine Abnahme und Gleichrichtung der Spannung an den Anschlüssen der zusätzlichen Primärwicklung (17) ermöglichen, eine Diodenbrücke enthälten, die von vier Dioden ($D_1$, $D_2$, $D_3$, $D_4$) gebildet ist, wobei die Anoden einer ersten und einer zweiten Diode ($D_1$, $D_2$) dieser Brücke miteinander, mit den eine Bezugsspannung liefernden Einrichtungen (25) und den Dämpfungseinrichtungen (27) verbunden sind, die Kathoden der genannten ersten und zweiten Dioden ($D_1$, $D_2$) jeweils mit den Anschlüssen der zusätzlichen Primärwicklung (17) verbunden sind, die Anoden einer dritten und einer vierten Diode ($D_3$, $D_4$) dieser Brücke miteinander, mit einem Kondensator ($C_4$) und mit den Vergleichs- und Verstärkungseinrichtungen (15) verbunden sind und die Kathoden der genannten dritten und vierten Dioden jeweils mit den Endanschlüssen der zusätzlichen Primärwicklung (17) verbunden sind, wobei der genannte Kondensator ($C_4$) außerdem mit Masse verbunden ist.

10. Symmetrischer Spannungswandler mit Primärregelung nach Anspruch 1, **dadurch gekennzeichnet**, daß die Einrichtungen zum Variieren der Verstärkung der Regelschaltung in Abhängigkeit von der Frequenz einen Kondensator enthalten, der mit den Anlassereinrichtungen verbunden ist.

11. Symmetrischer Spannungswandler mit Primärregelung nach Anspruch 10, **dadurch gekennzeichnet**, daß die Anlassereinrichtungen (13a) zwei Widerstände enthalten, die in Serie einerseits mit der Gleichspannungsquelle und andererseits mit den Schaltern und mit den Verstärkungseinrichtungen verbunden sind, wobei der Kondensator ($C_3$) der Einrichtungen (13a) zum Variieren der Verstärkung in Anhängigkeit von der Frequenz parallel zum Widerstand größter Impedanz geschaltet ist.

12. Symmetrischer Spannungswandler mit Primärregelung nach Anspruch 10, **dadurch gekennzeichnet**, daß die Anlassereinrichtungen (13a) einen ersten Feldeffekttransistor ($T_7$) sowie einen zweiten Feldeffekttransisotr ($T_8$) enthalten, wobei der Kondensator ($C_7$) der Einrichtungen (13b) zum Variieren der Verstärkung in Anhängigkeit von der Frequenz mit Masse und mit dem Gate des zweiten Transistors ($T_8$) über einen ersten Widerstand ($R_{12}$) verbunden ist, der genannte erste Widerstand ($R_{12}$) weiterhin mit den Verstärkungseinrichtungen (15b) über einen zweiten Widerstand ($R_{13}$) verbunden ist, das Drain des zweiten Transistors ($T_8$) mit der Gleichspannungsquelle ($V_a$) über einen dritten Widerstand ($R_{14}$) verbunden ist und die Source-Elektrode dieses zweiten Widerstandes ($T_8$) mit den Verstärkungseinrichtungen (15b) über einen vierten Widerstand ($R_{16}$) und mit der Basis des ersten Transistors ($T_7$) verbunden ist, der Kollektor des ersten Transistors ($T_7$) mit der Gleichspannungsquelle ($V_a$) über einen fünften Widerstand ($R_{15}$) verbunden ist und der Emitter des ersten Transistors ($T_7$) mit einer Zehnerdiode ($Z_2$) verbunden ist, die ihrerseits mit den ersten und zweiten Schaltern ($T_1$, $T_2$) verbunden ist.

13. Symmetrischer Spannungswandler mit Primärregelung nach den Ansprüchen 2 und 12, **dadurch gekennzeichnet**, daß die Einrichtungen zum Begrenzen des ersten Stroms, der zum Anlassen notwendig ist, einen dritten Transistor enthalten, wobei die Basis des dritten Transistors ($T_6$) über einen sechsten Widerstand ($R_{11}$) mit den Steuereinrichtungen (11) und einem variablen Widerstand ($t_2$) verbunden ist, der seinerseits mit Masse verbunden ist, der Emitter des dritten Transistors ($T_6$) mit Masse verbunden ist und der Kollektor mit dem Kondensator ($C_7$) der Einrichtungen (13b)

zum Variieren der Verstärkung in Anhängigkeit von der Frequenz und mit den ersten und zweiten Widerständen ($R_{12}$, $R_{13}$) verbunden ist.

FIG.1

FIG.2

FIG.3

FIG.4

FIG.5

FIG.6